# EUROPÄISCHE PATENTANMELDUNG

(11) **EP 1 854 624 A1**
(43) Veröffentlichungstag der Anmeldung: **14.11.2007**
(21) Anmeldenummer: 07450079.4
(22) Anmeldetag: 26.04.2007
(51) Int. Cl.: B32B 17/10, C03C 27/12, B30B 15/06

(54) **Verfahren und Vorrichtung zum Herstellen von Verbundglas**

(30) Priorität: 11.05.2006 AT 8122006
(71) Anmelder: Lisec, Peter, A-3363 Amstetten-Hausmening (AT)
(72) Erfinder: Lisec, Peter, A-3363 Amstetten-Hausmening (AT)
(74) Vertreter: Beer, Manfred

(57) **Zusammenfassung**

Zum Herstellen von Verbundglas wird ein Paket aus wenigstens zwei Glastafeln 19 und einer dazwischen angeordneten Kunststofffolie 21 in einen Raum 15 zwischen zwei Pressplatten 3,5 bewegt. Die Pressplatten 3,5 werden einander angenähert und der Raum 15 zwischen den Pressplatten ringum das herzustellende Verbundglas herum abgedichtet, evakuiert und das Paket aus Glasplatten 19 und Folie 21 erhitzt, um die Folie 21 klebrig zu machen. Sobald die gewünschte Temperatur erreicht ist, wird, bei weiterhin aufrecht erhaltenem Unterdruck, die Presse 1 geschlossen, bis die Pressplatten 3,5 flächig auf die Außenseiten der Glastafeln 19 Druck ausüben und der Verbund zwischen den beiden Glastafeln 19 und der dazwischen angeordneten, jetzt erweichten und klebrigen Folie 21, herbeigeführt. Darauf wird abgekühlt, wobei die Presse 1 weiterhin geschlossen ist. Sobald weit genug abgekühlt worden ist (beispielsweise bis auf Raumtemperatur) wird die Presse 1 geöffnet und das Verbundglas abtransportiert.

## Beschreibung

Die Erfindung betrifft ein Verfahren zum Herstellen von Verbundglas Verfahren zum Herstellen von Verbundglas bestehend aus wenigstens zwei Glastafeln und wenigstens einer dazwischen angeordneten Kunststofffolie, bei dem man ein Paket aus Glastafeln und Kunststofffolie bei erhöhter Temperatur und verringertem Druck flächig zusammenpresst und unter Aufrechterhalten des Pressdruckes abkühlt.

Die Erfindung betrifft weiters und eine Vorrichtung, mit welcher dieses Verfahren ausgeführt werden kann.

Beim Herstellen von Verbundglas, bestehend aus wenigstens zwei Glasplatten und wenigstens einer dazwischen angeordneten Folie aus Kunststoff, über welche die Glasplatten miteinander verbunden sind, ergeben sich im Stand der Technik insoferne Probleme, als beim Zusammenfügen der drei Lagen (zwei Glastafeln und eine Kunststofffolie) Lufteinschlüsse nur schwer zu vermeiden sind.

Ein Verfahren der eingangs genannten Gattung ist aus der DE 2 209 642 A bekannt. Bei diesem bekannten Verfahren wir ein bereits zusammengelegtes Paket aus zwei Glasscheiben und einer Kunststofffolie bei verringertem Druck erhitzt.

Aus der US 1,878,899 A ist eine Presse zum Herstellen von Verbundglas bekannt. Das Anwenden von verringertem Druck beim Herstellen von Verbundglas ist dort nicht vorgesehen.

Der Erfindung liegt die Aufgabe zugrunde, ein Verfahren und eine zum Durchführen des Verfahrens geeignete Vorrichtung vorzuschlagen, mit welcher Verbundglas problemlos hergestellt werden kann.

Gelöst wird diese Aufgabe erfindungsgemäß mit einem Verfahren, das die Merkmale von Anspruch 1 aufweist.

Insoweit die erfindungsgemäße Vorrichtung zum Durchführen des Verfahrens der Erfindung betroffen ist, wird diese Aufgabe mit einer Vorrichtung gelöst, welche die Merkmale des unabhängigen Vorrichtungsanspruches aufweist.

Bevorzugte und vorteilhafte Ausgestaltungen der Erfindung (Verfahren und Vorrichtung) sind Gegenstand der Unteransprüche.

Da bei dem erfindungsgemäßen Verfahren der Zusammenbau der Verbundglasscheibe in einer Flächenpresse und bei verringertem Luftdruck erfolgt, ist die Gefahr von Lufteinschlüssen zwischen den Glasplatten und der Kunststofffolie praktisch völlig beseitigt.

Überdies ist bei nach dem erfindungsgemäßen Verfahren hergestelltem Verbundglas ein sicherer, weil durchgehender, Verbund zwischen der Kunststofffolie und den Glastafeln sichergestellt.

Im Einzelnen kann bei dem erfindungsgemäßen Verfahren wie folgt vorgegangen werden:
- Ein Paket, bestehend aus wenigstens zwei Glasplatten und wenigsten einer Kunststofffolie wird in den Raum zwischen den Platten einer Flächenpresse eingebracht.
- Das Paket wird auf eine Temperatur erwärmt, bei der die Kunststoffolie klebrig ist, z.B. auf eine Temperatur von etwa 120 bis 140°C.
- Sobald das Erwärmen abgeschlossen ist, wird die Presse ringsum das Paket aus Glasplatten und Kunststofffolie abgedichtet und der Luftdruck in dem zwischen den Pressplatten verbleibenden Raum, in welchen sich das Paket aus den Glasplatten und der Kunststofffolie befindet, abgesenkt, indem Luft abgepumpt wird.
- Sobald der gewünschte, gegenüber dem Umgebungsdruck verringerte Druck der Luft innerhalb der Flächenpresse erreicht worden ist, wird die Wärmezufuhr unterbrochen.
- Hierauf wir die Presse geschlossen, um die Glasplatten von beiden Seiten her an die Kunststofffolie anzudrücken.
- Hierauf wird das Paket aus den Glasplatten und der dazwischen angeordneten Kunststofffolie bei geschlossener Presse gekühlt.
- Schließlich wird das Verbundglas aus der Flächenpresse heraus bewegt.

Das Kühlen, während dem die Platten der Presse das Paket über dessen gesamte Fläche zusammendrückend belasten, kann insbesondere dadurch erfolgen, dass dem Verbundglas Wärme über die an ihm anliegenden Pressplatten entzogen wird.

Bei dem erfindungsgemäßen Verfahren kann auch so gearbeitet werden, dass das Paket aus den Glasplatten und der dazwischen angeordneten Kunststofffolie vorverpresst wird, bevor es zwischen die Flächenpresse eingeführt wird. Dabei besteht die Möglichkeit, das Vorpressen mit Hilfe von aufeinanderfolgenden Walzenpaaren auszuführen, wobei der Druck, den die Walzenpaare auf das Paket ausüben, in Förderrichtung größer werden kann.

Das Bewegen der Glasplatten und der Kunststofffolie in den Raum zwischen den Platten der Flächenpresse, ganz gleich ob das Paket vorverpresst worden ist oder nicht, kann durch zwischen den Platten der Presse und den Glasplatten erzeugte Luftkissen unterstützt werden.

Die Platten der Presse und das Paket aus wenigstens zwei Glastafeln und wenigstens einer Kunststofffolie kann beliebig ausgerichtet (lotrecht, schräg, horizontal) sein. Bevorzugt ist eine im Wesentlichen lotrechte Ausrichtung. Dabei ist am unteren Rand der Platten der Flächenpresse bevorzugt ein Horizontalförderer, beispielsweise in Form eines Fördergurtes oder einer Rollenreihe, vorgesehen.

Bevorzugt ist es im Rahmen der Erfindung, wenn die erfindungsgemäße Vorrichtung in die Platten der Flächenpresse integriert sowohl Heizeinrichtungen, als auch,KühLeinrichtungen aufweist.

Dabei sind die Heizeinrichtungen und die Kühleinrichtungen bevorzugt mit geringem Abstand voneinander angeordnet und werden abwechselnd einmal zum Aufheizen (Heizeinrichtungen) und einmal zum Kühlen (Kühleinrichtungen) verwendet.

Beispielsweise sind die Heizeinrichtungen elektrische Widerstandsheizungen und die Kühleinrichtungen von einem gefüllten Medium durchströmte Kanäle (Rohre) in den Platten der Flächenpresse.

Es ist auch in Betracht gezogen, die Heizeinrichtung so auszubilden, dass sie auch zum Kühlen herangezogen werden kann. Dies kann beispielsweise dadurch verwirklicht werden, dass durch die Rohre beim Heizen ein erwärmtes Medium und beim Kühlen ein gekühltes Medium geleitet wird. Es ist z.B. aber auch denkbar, den Rohren, durch die das beim Kühlen gekühlte Medium geleitet wird, elektrische Heizungen (induktive Heizung und/oder Widerstandsheizung) zuzuordnen, oder die Rohre selbst werden elektrisch (induktiv oder als Widerstandsheizstab) erhitzt.

Um den verringerten Luftdruck im Raum zwischen den Platten der Presse erzeugen zu können, sind an den Rändern der Platten Dichtungen vorgesehen. An den Rändern der Platten von außen her anliegende Dichtungen sind ebenso in Betracht gezogen, wie aus den einander zugekehrten Flächen (wenigstens der Fläche einer Platte) herausfahrbare Dichtungen, die an gegenüberliegende Dichtungen oder gegenüberliegende Platten anlegbar sind.

Weitere Einzelheiten und Merkmale des erfindungsgemäßen Verfahrens und der erfindungsgemäßen Vorrichtung ergeben sich aus der nachstehenden Beschreibung eines bevorzugten Ausführungsbeispiels einer erfindungsgemäßen Vorrichtung zum Durchführen des Verfahrens der Erfindung anhand der Zeichnungen.

Es zeigt:

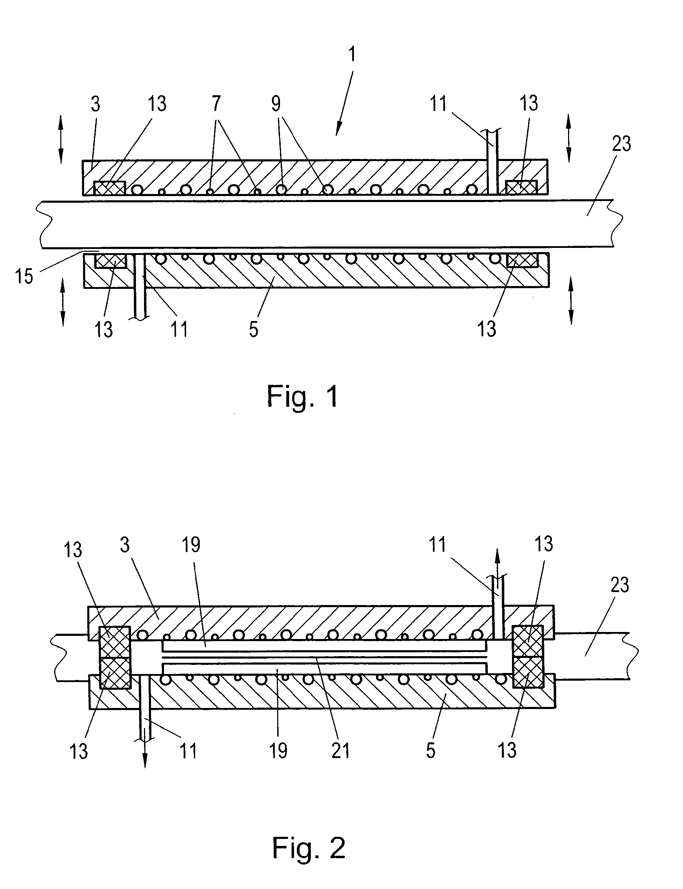

Fig. 1 schematisch und in Draufsicht (von oben gesehen) eine Vorrichtung zum Ausführen des erfindungesgemäßen Verfahrens und
Fig. 2 ebenfalls in Draufsicht, die Vorrichtung aus Fig. 1 beim Herstellen von Verbundglas

Eine zum Ausführen des erfindungsgemäßen Verfahrens geeignete Vorrichtung (Flächenpresse 1) besitzt zwei im Wesentlichen lotrecht stehende Pressplatten 3,5, von welchen wenigstens eine quer zu ihrer Flächenerstreckung verschiebbar ist. Vorzugsweise sind aber beide Platten 3,5 verschiebbar.

In den Platten 3,5 sind Heizeinrichtungen 7, z.B. eine elektrische Widerstandsheizung, und Kühleinrichtungen 9, z.B. Rohre, durch welche ein gekühltes Medium strömt, vorgesehen. Sowohl die Heizeinrichtungen 7 als auch die Kühleinrichtungen 9 sind in jeder der Pressplatten 3,5 in der Nähe der einander zugekehrten Flächen der Pressplatten 3,5 vorgesehen.

Zusätzlich mündet in jeder Pressplatte 3,5 an ihrer, der jeweils anderen Pressplatte 3,5 zugekehrten Seite wenigstens eine Vakuumleitung 11.

In den einander zugekehrten Flächen der Pressplatten 3,5 sind - wenigstens an einer der Pressplatten 3,5 - Dichtungen 13 vorgesehen, welche bei einander angenäherten Pressplatten 3,5, den Raum 15 zwischen den Pressplatten 3,5 gegenüber der Umgebung ringsum abdichten. Es sind also nicht nur seitliche Dichtungen 13, sondern auch am oberen und am unteren Rand Dichtungen 13 vorgesehen. Die Dichtungen 13 können eine an sich beliebige Ausführungsform haben, bevorzugt ist es aber, wenn an jeder der Pressplatten 3,5 Dichtungen 13 vorgesehen sind, die in Richtung auf die andere Pressplatte 3,5 bzw. die dort vorgesehene Dichtung 13 vorschiebbar sind, um den Raum 15 zwischen den Pressplatten 3,5, indem dann eine Verbundglasscheibe hergestellt werden soll, gegenüber der Umgebung abzudichten, sodass der Raum 15 zwischen den Pressplatten 3,5 über die Vakuumleitungen 11 evakuiert werden kann.

Wenn die Pressplatten 3,5 im Wesentlichen lotrecht sind, ist für den Antransport eines Paketes aus zwei Glasplatten 19 und einer Kunststofffolie 21 eine Horizontalfördervorrichtung 23 vorgesehen, die am unteren Rand der Pressplatte 3,5 angeordnet ist.

Mit Hilfe der erfindungsgemäßen Vorrichtung 1 kann unter Anwendung des erfindungsgemäßen Verfahrens beim Herstellen einer Verbundglasscheibe wie folgt vorgegangen werden.

Als erstes wird in den Raum 15 zwischen den beiden Pressplatten 3,5 ein Paket 17 bestehend aus wenigstens zwei Glasplatten 19 und wenigstens einer Kunststofffolie 21, welche im Verbundglas die beiden Glasplatten 19 flächig miteinander verbindet, eingebracht. Dies kann so erfolgen, dass das Paket aus den Glasscheiben 19 und der Folie 21 außerhalb der Pressplatten 3,5 zusammengestellt und dann als solches in den Raum 15 zwischen den Pressplatten 3,5 transportiert wird. Es ist aber auch denkbar, zunächst eine der beiden Glasplatten 19 in den Raum 15 zwischen den Pressplatten 3,5 hineinzufördern und dann die zweite Glasplatte 19 mit davor angeordneter, also auf der der anderen Glasplatte 19, die schon in der Vorrichtung 1 steht (zwischen den Pressplatten 3,5 bereitgestellt) zugewendeten Fläche befindlicher Folie 21, in den Raum 15 zwischen den Pressplatten 3,5 zu bewegen.

Nun wird das Paket, also die beiden Glasplatten 19 und die dazwischen angeordnete Kunststofffolie 21 durch Inbetriebnahme der Heizeinrichtungen 7 (elektrische Widerstandsheizung) erhitzt wobei, beispielsweise bis auf etwa 120 bis 140°C erhitzt wird.

Nach dem Abschluss des Aufheizvorganges werden die Pressplatten 3,5 einander angenähert und nach dem Schließen der Dichtungen 13 der Raum 15 zwischen den Pressplatten 3,5, in dem sich das Paket aus den Glasplatten und der Folie 21 befindet, evakuiert.

Nach dem Evakuieren wird das Paket aus den wenigstens zwei Glasplatten 19 und der wenigstens einen Kunststofffolie 21 verpresst, indem die Presse schlossen wird, indem Pressplatten 3,5 einander angenähert werden bis sie das Pekte an den Glasplatten 19 und der Kunststofffolie 21 zusammendrücken.

Sobald dies geschehen ist, wird bei weiterhin geschlossener Presse, also mit an den Außenflächen der beiden Glastafeln 19 anliegenden Pressplatten 3,5, das Paket aus den beiden Glasplatten 19 und der Folie 21 abgekühlt, indem durch die Kühlrohre 9 Kühlmedium geleitet wird.

Sobald das Abkühlen soweit fortgeschritten ist, dass das jetzt fertig gestellte Verbundglas im Wesentlichen Raumtemperatur hat, also ein sicherer Verbund zwischen den beiden Glastafeln 19, über die dazwischen angeordnete Kunststofffolie 21 erreicht ist, wird das Evakuieren abgebrochen, die Dichtungen 13 zurückgezogen und die fertige Verbundglasscheibe mit Hilfe des Horizontalförderers 23 aus der Vorrichtung abtransportiert.

Zusammenfassend kann ein Ausführungsbeispiel der Erfindung wie folgt beschrieben werden.

Zum Herstellen von Verbundglas wird ein Paket aus wenigstens zwei Glastafeln 19 und einer dazwischen angeordneten Kunststofffolie 21 in einen Raum 15 zwischen zwei Pressplatten 3,5 bewegt. Die Pressplatten 3,5 werden einander angenähert und der Raum 15 zwischen den Pressplatten ringum das herzustellende Verbundglas herum abgedichtet, evakuiert und das Paket aus Glasplatten 19 und Folie 21 erhitzt, um die Folie 21 klebrig zu machen. Sobald die gewünschte Temperatur erreicht ist, wird, bei weiterhin aufrecht erhaltenem Unterdruck, die Presse 1 geschlossen, bis die Pressplatten 3,5 flächig auf die Außenseiten der Glastafeln 19 Druck ausüben und der Verbund zwischen den beiden Glastafeln 19 und der dazwischen angeordneten, jetzt erweichten und klebrigen Folie 21, herbeigeführt. Darauf wird abgekühlt, wobei die Presse 1 weiterhin geschlossen ist. Sobald weit genug abgekühlt worden ist (beispielsweise bis auf Raumtemperatur) wird die Presse 1 geöffnet und das Verbundglas abtransportiert.

## Patentansprüche

1. Verfahren zum Herstellen von Verbundglas bestehend aus wenigstens zwei Glastafeln (19) und wenigstens einer dazwischen angeordneten Kunststofffolie (21), bei dem man ein Paket aus Glastafeln (19) und Kunststofffolie (21) bei erhöhter Temperatur und verringertem Druck flächig zusammenpresst und unter Aufrechterhalten des Pressdruckes abkühlt,**dadurch gekennzeichnet, dass** mit dem Evakuieren begonnen wird, sobald die Kunststofffolie (21) die Erweichungstemperatur erreicht hat und dass das Schließen des Paketes, also das Anlegen der Glastafeln (19) an die beiden Seiten der Kunststofffolie (21), unter vermindertem Druck erfolgt.

2. Verfahren nach Anspruch 1, **dadurch gekennzeichnet, dass** auf die Außenflächen der beiden Glastafeln (19) über deren gesamte Fläche gleichmäßig Druck ausgeübt wird.

3. Vorrichtung zum Durchführen der Verfahren nach Anspruch 1 oder 2, mit zwei Pressplatten (3,5) und mit den Pressplatten (3,5) zugeordneten Heizeinrichtungen (7) und Kühleinrichtungen (9), **dadurch gekennzeichnet, dass** die Pressplatten (3, 5) mit einer Dichteinrichtung (13) ausgestattet sind, dass die Dichtungen (13) aus den Ebenen der Pressplatten (3,5) ausfahrbare Dichtungen sind, und dass in wenigstens einer der Pressplatten (3,5) eine Vakuumleitung (11) im Bereich innerhalb der Dichtungen (13) mündet.

4. Vorrichtung nach Anspruch 3, **dadurch gekennzeichnet, dass** die Pressplatten (3,5) im Wesentlichen lotrecht stehend ausgerichtet sind.

5. Vorrichtung nach Anspruch 4, **dadurch gekennzeichnet, dass** im Bereich des unteren Randes der Pressplatten (3,5) eine Fördervorrichtung (23), z.B. ein Band oder Rollenförderer, für den Antransport von Paketen aus zwei Glasplatten (19) und einer Folie (21) vorgesehen ist.

6. Vorrichtung nach einem der Ansprüche 3 bis 5, **dadurch gekennzeichnet, dass** die Kühleinrichtung (9)in jeder der Pressplatten (3,5) im Bereich ihrer der anderen Pressplatte (3,5) zugekehrten Fläche angeordnet ist.

7. Vorrichtung nach einem der Ansprüche 3 bis 6, **dadurch gekennzeichnet, dass** die Heizeinrichtung (7) in jeder Pressplatte (3,5) im Bereich ihrer der anderen Pressplatten (5,3) zugekehrten Fläche vorgesehen ist.

8. Vorrichtung nach einem der Ansprüche 3 bis 7, **dadurch gekennzeichnet, dass** die Kühleinrichtung (9) Kühlrohre für den Durchtritt eines Kühlmediums ist.

9. Vorrichtung nach einem der Ansprüche 3 bis 8, **dadurch gekennzeichnet, dass** die Heizeinrichtung (7) eine elektrische Widerstandsheizung ist.

10. Vorrichtung nach einem der Ansprüche 3 bis 10, **dadurch gekennzeichnet, dass** in jeder der Pressplatten (3, 5) eine Vakuumleitung (11) mündet.

11. Vorrichtung nach einem der Ansprüche 3 bis 10, **dadurch gekennzeichnet, dass** der Abstand der Pressplatten (3,5) voneinander durch Bewegen wenigstens einer der Pressplatten (3, 5) quer zu ihrer Fläche veränderbar ist.
